# EUROPEAN PATENT APPLICATION

(11) **EP 4 657 876 A1**
(43) Date of publication of application: **03.12.2025**
(21) Application number: 25178590.3
(22) Date of filing: 23.05.2025
(51) Int. Cl.: H04N 25/78, H04N 25/79, H04N 25/616

(54) **PHOTOELECTRIC CONVERSION APPARATUS, EQUIPMENT, AND MOVABLE BODY**

(30) Priority: 30.05.2024 JP 2024088439
(71) Applicant: CANON KABUSHIKI KAISHA, Tokyo 146-8501 (JP)
(72) Inventor: YAMASHITA, Takanori, Tokyo, 146-8501 (JP); YAMASAKI, Takahiro, Tokyo, 146-8501 (JP); ARISHIMA, Yu, Tokyo, 146-8501 (JP)
(74) Representative: Canon Europe Limited

(57) **Abstract**

A photoelectric conversion apparatus includes at least two substrates including a first substrate including a pixel unit in which a plurality of pixels each including a photoelectric conversion element and an amplification transistor are arranged in an array, and a second substrate including a memory unit configured to hold an analog signal output by the pixel unit. A current source, and a transistor connected to a node through which signals output from the current source and the amplification transistor pass are arranged on a substrate different from the first substrate out of the at least two substrates. The transistor can switch an operation of resetting a potential of the node, and an operation of clipping a potential of the node.

## Description

### BACKGROUND OF THE INVENTION

### Field of the Invention

The present disclosure relates to a photoelectric conversion apparatus, an equipment, and a movable body.

### Description of the Related Art

PCT International Publication No. WO2023/062935 discusses a photoelectric conversion apparatus in which a plurality of substrates are stacked. PCT International Publication No. WO2023/062935 discusses a configuration of a photoelectric conversion apparatus in which a first substrate on which a photodiode (PD) and an amplification transistor are arranged includes a clip transistor that performs a clip operation such that a signal to be output from a pixel readout circuit does not reach a predetermined voltage or less.

In order to improve the image quality of a photoelectric conversion apparatus, it is necessary to efficiently arrange a transistor while ensuring an arrangement area of a PD and an amplification transistor included in one pixel. Nevertheless, in the photoelectric conversion apparatus discussed in PCT International Publication No. WO2023/062935, the clip transistor is arranged on the first substrate on which the PD and the amplification transistor are arranged, and thus an area in which the PD and the amplification transistor are arranged becomes smaller, and image quality might fail to be improved.

### SUMMARY OF THE INVENTION

The present disclosure is directed to providing a photoelectric conversion apparatus that can improve image quality in a photoelectric conversion apparatus in which a plurality of substrates are stacked.

According to a first aspect of the present invention, there is provided a photoelectric conversion apparatus as specified in claims 1 to 9. According to a second aspect of the present invention, there is provided an equipment as specified in claim 10. According to a third aspect of the present invention, there is provided a movable body as specified in claim 11.

Further features of the present invention will become apparent from the following description of embodiments with reference to the attached drawings.

### BRIEF DESCRIPTION OF THE DRAWINGS

Fig. 1 is a schematic diagram illustrating a photoelectric conversion apparatus according to a first embodiment.
Fig. 2 is a block diagram illustrating the photoelectric conversion apparatus according to the first embodiment.
Fig. 3 is a circuit diagram illustrating a part of a pixel unit, a pixel memory unit, and a signal processing unit in the block diagram illustrating the photoelectric conversion apparatus according to the first embodiment.
Fig. 4 is a voltage switching circuit diagram of a voltage to be input to a gate of a clip transistor according to the first embodiment.
Figs. 5A, 5B, and 5C are scanning image diagrams of a row direction with respect to a time of the photoelectric conversion apparatus according to the first embodiment.
Fig. 6 is an image diagram illustrating divided regions of the photoelectric conversion apparatus according to the first embodiment.
Fig. 7 is a timing chart of region selection of the photoelectric conversion apparatus according to the first embodiment.
Fig. 8 is a timing chart in a pixel memory writing period of the photoelectric conversion apparatus according to the first embodiment.
Fig. 9 is a timing chart in a pixel memory readout period of the photoelectric conversion apparatus according to the first embodiment.
Fig. 10 is a circuit chart illustrating a part of a pixel unit, a pixel memory unit, and a signal processing unit in a block diagram illustrating a photoelectric conversion apparatus according to a second embodiment.
Fig. 11 is a voltage switching circuit of a voltage to be input to a gate of a transistor of the photoelectric conversion apparatus according to the second embodiment.
Fig. 12 is a timing chart in a pixel memory writing period of the photoelectric conversion apparatus according to the second embodiment.
Fig. 13 is a timing chart in a pixel memory readout period of the photoelectric conversion apparatus according to the second embodiment.
Fig. 14 is a circuit diagram of a part of a signal processing unit of a photoelectric conversion apparatus according to a third embodiment.
Figs. 15A to 15C are schematic diagrams illustrating equipment according to a fourth embodiment.

### DESCRIPTION OF THE EMBODIMENTS

Hereinafter, embodiments will be described with reference to the drawings. The following embodiments are not intended to limit the invention set forth in the appended claims. Each of the embodiments of the present invention described below can be implemented solely or as a combination of a plurality of the embodiments or features thereof where necessary or where the combination of elements or features from individual embodiments is beneficial. A plurality of features are described in the embodiments, but not all the plurality of features are always essential to the invention. The plurality of features can also be arbitrarily combined. Furthermore, in the accompanying drawings, the same or similar components are assigned the same reference numerals, and the redundant description will be omitted. In each embodiment to be described below, a sensor for image capturing will mainly be described as an example of a photoelectric conversion apparatus. Nevertheless, the photoelectric conversion apparatus in each embodiment is not limited to the sensor for image capturing, and each embodiment can also be applied to another example of the photoelectric conversion apparatus. Examples of the photoelectric conversion apparatus include an imaging apparatus, a distance measurement apparatus (apparatus of distance measurement that uses focus detection or Time Of Flight (TOF)), and a photometric apparatus (apparatus of measurement of an incident light amount).

In the following description, terms (e.g., "up", "down", "right", "left", and other terms including these terms) indicating specific directions and positions are used as necessary. These terms are used to facilitate the understanding of the embodiment to be described with reference to the drawings. The technical scope of the present invention is not limited by the meanings of these terms.

In this specification, in a case where it is described that "a member A and a member B are electrically connected", the case is not limited to a case where the member A and the member B are directly connected. For example, even if another member C is connected between the member A and the member B, it is sufficient that the member A and the member B are electrically connected.

In this specification, a "plane" refers to a surface in a direction parallel to a principal surface of a substrate. The principal surface of the substrate can be a light incidence surface of the substrate that includes a photoelectric conversion element, a surface on which a plurality of analog-to-digital converters (ADCs) are repeatedly arranged, or a bonded surface of a substrate and a substrate in a stack-type photoelectric conversion apparatus. A "planar view" refers to viewing from a direction vertical to the principal surface of the substrate. Furthermore, a "cross-section" refers to a surface in a direction vertical to a light incidence surface of a semiconductor layer. In addition, a cross-sectional view refers to viewing in a direction parallel to the principal surface of the substrate.

A metal member such as a wire and a pad to be described in this specification can be formed of a single metal of a certain element, or can be a mixture (alloy). For example, a wire to be described as a copper wire can be formed solely of copper, or can have a configuration mainly containing copper and further containing other components. For example, a pad to be connected with an external terminal can be formed solely of aluminum, or can have a configuration mainly containing aluminum and further containing other components. The copper wire and the aluminum pad described here are examples, and can be changed to various types of metal. The wire and the pad described here are also examples of metal members to be used in a photoelectric conversion apparatus, and can also be applied to other metal members.

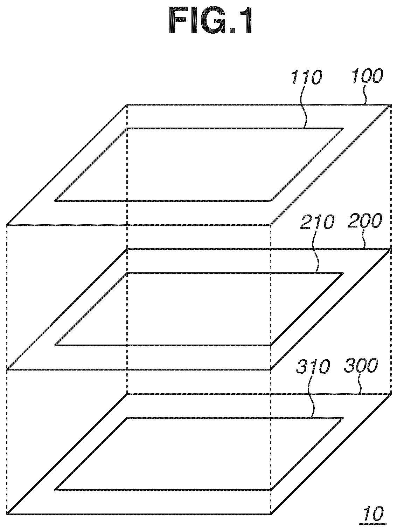

Regarding a photoelectric conversion apparatus according to a first embodiment of the present invention, a configuration for implementing a photoelectric conversion apparatus 10 will be specifically described with reference to Figs. 1 to 9.

Fig. 1 is an example of a schematic diagram of the photoelectric conversion apparatus 10 according to the present embodiment. As illustrated in Fig. 1, the photoelectric conversion apparatus 10 has a three-dimensional structure in which a plurality of substrates are stacked and bonded. The photoelectric conversion apparatus 10 includes three substrates corresponding to a first substrate 100, a second substrate 200, and a third substrate 300. The third substrate 300, the second substrate 200, and the first substrate 100 are stacked in this order.

Each of the first substrate 100, the second substrate 200, and the third substrate 300 can include a semiconductor substrate such as a silicon substrate, and a wiring structure. The sizes of the first substrate 100, the second substrate 200, and the third substrate 300 can be substantially equal. The "substantially equal" relationship is a relationship equal in terms of design, but a slight difference can be generated due to a manufacturing error. The "approximately equal" includes the slight difference generated due to a manufacturing error.

The first substrate 100 includes a pixel unit 110, the second substrate 200 includes a pixel memory unit 210, and the third substrate 300 includes a signal processing unit 310. Each substrate can include a semiconductor layer such as a silicon layer, and a wiring layer. Each substrate can be in whichever of a wafer state and a chip state, but is desirably in a chip state.

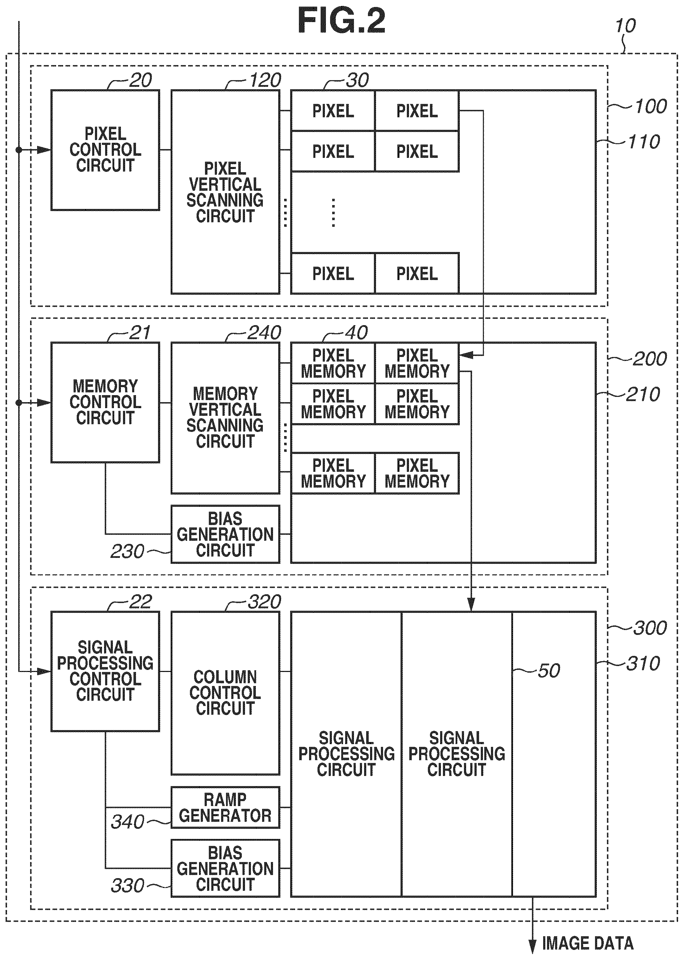

Fig. 2 is an example of a block diagram of a photoelectric conversion apparatus according to the present embodiment. As illustrated in Fig. 2, the first substrate 100 forms the pixel unit 110 in which pixels 30 each including a photodiode (PD), and a pixel circuit are two-dimensionally arranged. In the pixel unit 110, a plurality of pixels 30 are provided in an array of a plurality of rows and a plurality of columns. The PD is a photoelectric conversion element that generates and accumulates signal charges in accordance with a received light amount, and outputs an analog signal, which is a pixel signal corresponding to a light amount of incident light.

A signal input from an external source is input to a pixel control circuit 20, and a control signal for controlling a pixel vertical scanning circuit 120 is output. The pixel vertical scanning circuit 120 then controls the pixel unit 110.

An output pixel signal is input from the first substrate 100 to a pixel memory 40 of the second substrate 200.

In this specification, a horizontal direction and a vertical direction in the drawings will be described as a row direction and a column direction, respectively. The number of rows and the number of columns of a plurality of pixels 30 arranged in the pixel unit 110 are not specifically limited. The plurality of pixels 30 can include an optical black pixel in which a photoelectric conversion element is light-shielded, and a dummy pixel that does not output a signal as well as an effective pixel that outputs a pixel signal corresponding to an incident light amount.

On each row of the pixel unit 110, a plurality of control lines extending in the row direction is arranged. Each of the plurality of control lines is connected to a plurality of pixels 30 arranged in the row direction. One control line controls in common a plurality of pixels 30 arranged on each row. The pixel control circuit 20 is connected to the pixel vertical scanning circuit 120, and a signal input from an external source is input to the pixel control circuit 20. The pixel vertical scanning circuit 120 supplies a control signal to each of the pixels 30 via the control line. A voltage SVDD, which is a power voltage, and a voltage SGND, which is a reference voltage, are supplied to the pixel unit 110, the pixel vertical scanning circuit 120, and the pixel control circuit 20.

The second substrate 200 includes the pixel memory unit 210. The pixel memories 40 are arranged in an array in a matrix to correspond to the pixels 30 in the first substrate 100, and form the pixel memory unit 210. The pixel memory unit 210 includes a drive circuit of a current source that writes a pixel signal into the pixel memory 40 to be described below. A signal input from an external source is input to a memory control circuit 21, and outputs a control signal for controlling a memory vertical scanning circuit 240. The memory vertical scanning circuit 240 controls the pixel memory 40 of the pixel memory unit 210. The memory control circuit 21 is also connected to a bias generation circuit 230, and controls a current value of a current source to be described below. The pixel memory 40 of the pixel memory unit 210 also writes a pixel signal output from the pixel 30 of the first substrate 100 or reads out a pixel signal from the pixel memory 40. A read-out pixel signal is input to a signal processing circuit 50 of the third substrate 300.

The third substrate 300 includes the signal processing unit 310. One signal processing circuit 50 is provided for the pixel memories 40 on one column that are two-dimensionally arranged. That is, the signal processing circuits 50 are one-dimensionally arranged in the column direction. A plurality of signal processing circuits 50 are arranged side by side in the row direction, and form the signal processing unit 310. The signal processing circuit 50 has a configuration including a comparator circuit that performs an operation of comparing a pixel signal read out from the pixel memory 40 of the second substrate 200 with a reference voltage, a drive circuit such as a current source, and a calculation processing circuit for data calculation processing. The reference voltage can be a voltage temporally changing and ramping, can be a voltage adapted to successive-approximation type Ad conversion, or can be a voltage adapted to delta sigma (ΔΣ) type AD conversion.

The calculation processing circuit needs not be provided for each column. For example, signals of the respective columns can be sequentially input to one common calculation processing circuit. A signal input from an external source is input to a signal processing control circuit 22, and controls a column control circuit 320, a ramp generator 340 that generates a reference voltage, and a bias generation circuit 330. The column control circuit 320, the ramp generator 340, and the bias generation circuit 330 then control the signal processing circuit 50. The controlled signal processing circuit 50 performs calculation processing based on a pixel signal read out from the pixel memory 40 of the second substrate 200, and outputs a signal via an output circuit. The output circuit includes a buffer amplifier and a differential amplifier, executes predetermined signal processing on a pixel signal output from the pixel 30, and outputs processed image data. Examples of signal processing performed by the output circuit include, for example, correction processing by correlated double sampling (CDS), and amplification processing. The output circuit includes a serial output circuit of a low voltage differential signal (LVDS) method, and outputs a signal-processed digital signal via an output of the photoelectric conversion apparatus at high speed with low power consumption. The output method is not limited to the LVDS, and another method can be used.

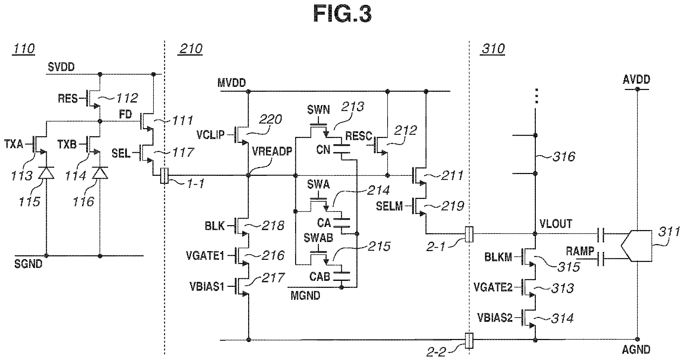

In the present embodiment, the photoelectric conversion apparatus in which three substrates are stacked has been described. However, the number of substrates is not limited to three. The photoelectric conversion apparatus can have a configuration in which four or more substrates are stacked, or can have a configuration in which two or more substrates are stacked. When a large number of substrates are used, a large number of circuit elements such as transistors can be arranged in each pixel, which is advantageous in achieving high functionality, and it is thus desirable that three or more substrates are stacked. A circuit configuration of the pixel 30 arranged on a semiconductor substrate of the first substrate 100, the pixel memory 40 arranged on a semiconductor substrate of the second substrate 200, and a part of the comparator circuit of the signal processing circuit 50 arranged on a semiconductor substrate of the third substrate 300 will be described with reference to Fig. 3.

The pixel 30 at least includes PDs 115 and 116, a floating diffusion (FD), an amplification transistor 111, and a reset transistor 112. The pixel 30 can further include transfer transistors 113 and 114, and a selection transistor 117.

One terminal of the PD 115 is connected to an SGND power line, and the other terminal thereof is connected to a source or a drain of the transfer transistor 113. One terminal of the PD 116 is connected to the SGND power line, and the other terminal thereof is connected to a one terminal of a source or a drain of the transfer transistor 114. The transfer transistor 113 is controlled by a control signal TXA supplied to a gate thereof, and the transfer transistor 114 is controlled by a control signal TXB supplied to a gate thereof. The other terminals of the source or the drain of the transfer transistors 113 and 114 are connected to the FD.

The FD is connected to one terminal of a source or a drain of the reset transistor 112. The reset transistor 112 is controlled by a control signal RES supplied to a gate thereof. The other terminal of the source or the drain of the reset transistor 112 is connected to an SVDD power line of a pixel power source. The FD is connected to a gate of the amplification transistor 111. One terminal of a source or a drain of the amplification transistor 111 is connected to the SVDD power line, and the other terminal of the source or the drain is connected to one terminal of a source or a drain of the selection transistor 117. The selection transistor 117 is controlled by a control signal SEL supplied to a gate thereof. In the present embodiment, the amplification transistor 111 is a source follower transistor. An SGND voltage is 0 V(volts), for example, and an SVDD voltage is 3.5 V, for example.

The other terminal of the source or the drain of the selection transistor 117 is connected from the pixel unit 110 of the first substrate 100 to a VREADP node (node) of the pixel memory unit 210 of the second substrate 200 via a first connection unit 1-1. The first connection unit 1-1 includes a wire for connecting the pixel unit 110 and the pixel memory unit 210 and the like. For example, the first connection unit 1-1 includes a metal bonded portion in which a metal portion (first metal portion) containing copper included in a wiring layer of the first substrate 100, and a metal portion (second metal portion) containing copper included in a wiring layer of the second substrate 200 are brought into contact and bonded. The first substrate 100 includes a first insulating film arranged in the same layer as the wiring layer, and the second substrate 200 includes a second insulating film arranged in the same layer as the wiring layer. In the photoelectric conversion apparatus 10, on a bonded surface of the first substrate 100 and the second substrate 200, a bonded portion in which the metal bonded portion, the first insulating film, and the second insulating film are bonded is arranged. In this manner, the first substrate 100 and the second substrate 200 are bonded by hybrid bonding.

The transfer transistor 113, 114, the reset transistor 112, the amplification transistor 111, and the selection transistor 117 can be N-type metal-oxide semiconductor (MOS) transistors, or can be P-type MOS transistors. In the present embodiment, the description will be given of a case where an electron of an electron-hole pair generated in a PD by light incidence is used as a signal charge. In a case where an electron is used as a signal charge, each transistor included in the pixel 30 can be formed as an N-type MOS transistor. Nevertheless, a signal charge is not limited to an electron, and a hole can be used as a signal charge. In a case where a hole is used as a signal charge, each transistor included in the pixel 30 can be formed as a P-type MOS transistor different from the transistor to be described in the present embodiment.

The VREADP node is connected with one terminal of a source or a drain of a current source switch transistor 218. The current source switch transistor 218 is controlled by a control signal BLK supplied to a gate thereof. One terminal of a source or a drain of a cascode transistor 216 is connected to the other terminal of the source or the drain of the current source switch transistor 218. In addition, one terminal of a source or a drain of a pixel current source transistor 217 is connected to the other terminal of the source or the drain of the cascode transistor 216. The cascode transistor 216 and the pixel current source transistor 217 are cascade-connected.

A voltage VGATE1, which is a voltage controlled by the bias generation circuit 230, is input to a gate of the cascode transistor 216, and a voltage VBIAS1, which is a voltage controlled by the bias generation circuit 230, is input to a gate of the pixel current source transistor 217. The other terminal of the source or the drain of the pixel current source transistor 217 is also connected to an AGND power line.

The VREADP node is connected with one of a source or a drain of sampling transistors 213, 214, and 215. The sampling transistor 213 is controlled by a control signal SWN supplied to a gate thereof. The sampling transistor 214 is controlled by a control signal SWA supplied to a gate thereof. A sampling transistor 215 is controlled by a control signal SWAB supplied to a gate thereof. The other terminal of the source or the drain of the sampling transistor 213 is connected to a hold capacitance CN one of whose terminals is connected to an MGND power line. The other terminal of the source or the drain of the sampling transistor 214 is connected to a hold capacitance CA one of whose terminals is connected to the MGND power line.

The other terminal of the source or the drain of the sampling transistor 215 is connected to a hold capacitance CAB one of which terminal is connected to the MGND power line. An MGND voltage is 0 V, for example.

The VREADP node is connected with one terminal of a source or a drain of a reset transistor 212. The reset transistor 212 is a transistor that resets a readout potential of the VREADP node. The reset transistor 212 is controlled by a control signal RESC supplied to a gate thereof. The other terminal of the source and the drain of the reset transistor 212 is connected with an MVDD power line. An MVDD voltage is 3.5 V, for example.

The VREADP node is connected with one terminal of a source or a drain of a clip transistor 220 (transistor). The clip transistor 220 is controlled by a control signal VCLIP supplied to a gate thereof. The other terminal of the source and the drain of the clip transistor 220 is connected with the MVDD power line.

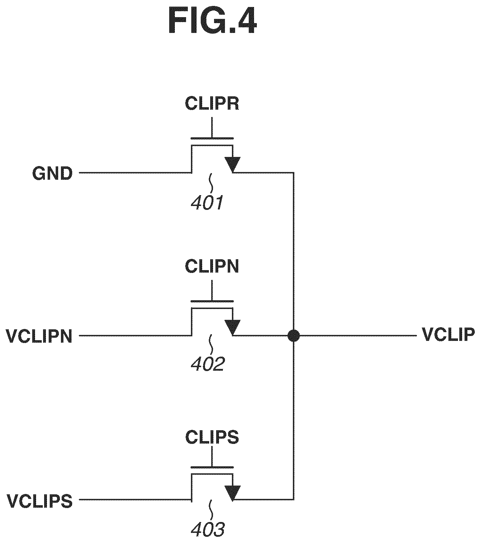

Here, the control signal VCLIP to be input to the gate of the clip transistor 220 will be described with reference to Fig. 4. The gate of the clip transistor 220 is connected to a voltage switching circuit illustrated in Fig. 4. The control signal VCLIP output from the voltage switching circuit is input to the gate of the clip transistor 220. In the present embodiment, the voltage switching circuit includes three switch transistors 401, 402, and 403. The switch transistor 401 is controlled by a control signal CLIPR supplied to a gate thereof, and one terminal thereof is connected to a GND power line (AGND). The switch transistor 402 is controlled by a control signal CLIPN supplied to a gate thereof, and one terminal thereof is connected to a VCLIPN voltage line. The switch transistor 403 is controlled by a control signal CLIPS supplied to a gate thereof, and one terminal thereof is connected to a VCLIPS voltage line. A GND power voltage is 0 V, for example, a VCLIPN voltage is 3.0 V, for example, and a VCLIPS voltage is 1.0 V, for example. The VCLIPN voltage and the VCLIPS voltage are desirably different voltages as described below, but can be the same voltage. A VCLIP voltage set when the VCLIPN voltage and the VCLIPS voltage are connected is a different voltage. A voltage setting method will be described below.

The VREADP node is connected with a gate of an amplification transistor 211 (second amplification transistor). One terminal of a source or a drain of the amplification transistor 211 is connected to the MVDD power line, and the other terminal is connected with one terminal of a source or a drain of a selection transistor 219.

The other terminal of the source or the drain of the selection transistor 219 is connected from the pixel memory unit 210 of the second substrate 200 to a VLOUT node of the signal processing unit 310 of the third substrate 300 via a second connection unit 2-1. The second connection unit 2-1 includes a wire for connecting the pixel memory unit 210 and the signal processing unit 310, and the like. For example, the second connection unit 2-1 includes a metal bonded portion in which a metal portion containing copper included in a wiring layer of the second substrate 200, and a metal portion containing copper included in a wiring layer of the third substrate 300 are brought into contact and bonded. The second substrate 200 includes a second insulating film arranged in the same layer as the wiring layer, and the third substrate 300 includes a third insulating film arranged in the same layer as the wiring layer. In the photoelectric conversion apparatus 10, on a bonded surface of the second substrate 200 and the third substrate 300, a bonded portion is arranged in which the metal bonded portion, the second insulating film, and the third insulating film are bonded. In this manner, the second substrate 200 and the third substrate 300 are bonded by hybrid bonding.

The VLOUT node (second node) includes a readout line 316 arranged in the row direction, and selectively connected with a plurality of pixel memories 40 arranged in the row direction. The VLOUT node is connected with one terminal of a source or a drain of a current source switch transistor 315 (second transistor). The current source switch transistor 315 is controlled by a control signal BLKM supplied to a gate thereof. The other terminal of the source or the drain of the current source switch transistor 315 is connected with one terminal of a source or a drain of a cascode transistor 313. The other terminal of the source or the drain of the cascode transistor 313 and one terminal of a source or a drain of a current source transistor 314 are connected. The cascode transistor 313 and the current source transistor 314 are cascade-connected.

A signal VGATE2 controlled in the bias generation circuit 330 is input to a gate of the cascode transistor 313. A signal VBIAS2 controlled in the bias generation circuit 330 is input to a gate of the current source transistor 314. The other terminal of the source or the drain of the current source transistor 314 is connected to the AGND power line. A voltage of the AGND power line is the same as a voltage of the AGND power line connected to the pixel current source transistor 217 included in the second substrate 200, via the second connection unit 2-2. An AGND voltage of the second substrate 200 and an AGND voltage of the third substrate 300 can be shared from a common pad.

The VLOUT node is connected to one differential input unit of a comparator circuit 311 connected to an AVDD power line and the AGND power line, and a ramped reference voltage RAMP generated by the ramp generator 340 is input to the other differential input unit. Based on a comparison result of the comparator circuit 311, an image signal is converted from an analog signal into a digital signal, and the digital signal is output.

By separating an SVDD power source, an MVDD power source, an AVDD power source, an SGND power source, an MGND power source, an AGND power source, and a GND power source as in the present embodiment, the influence of power fluctuation becomes less likely to reach another circuit. Nevertheless, a power configuration is not limited to the configuration in the present embodiment, and the power sources can be connected to the same power source.

In the present embodiment, two PDs are connected to a common FD, but the configuration is not limited to this. For example, three or more PDs can be connected to a common FD, or one PD can be connected to one FD. The configuration of the pixel 30 is an example, and the pixel 30 can further include a transistor. For example, a transistor that changes a capacitance value of the FD, and a transistor that discharges electric charges from the PD can also be provided. Alternatively, a configuration can also be employed in which the selection transistor 117 is not included, and a selected state or an unselected state of the pixel 30 is changed based on a voltage input from the reset transistor 112 to the FD.

The cascode transistors 216 and 313 are transistors for easily suppressing current changes due to drain voltage variations of the pixel current source transistor 217 and the current source transistor 314. Accordingly, the cascode transistors 216 and 313 can be omitted in a case where the influence of a current change due to a drain voltage variation is ignorable.

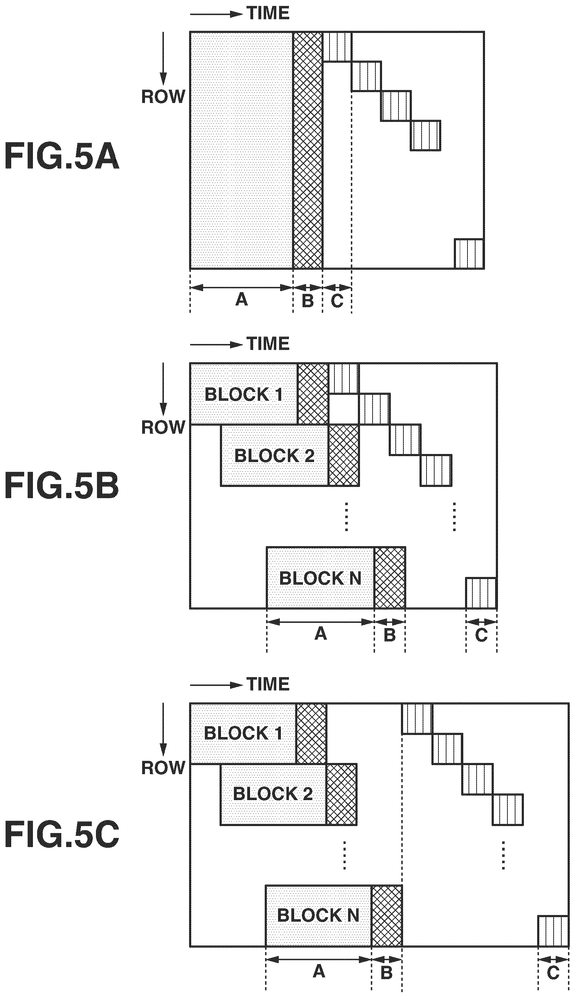

Next, a specific circuit operation of a photoelectric conversion apparatus will be described with reference to Figs. 5A to Fig. 7.

Fig. 5A illustrates an example of a scanning image in the row direction with respect to a time. First of all, periods will be described. A period A is an accumulation period during which electric charges are accumulated in the PD after a shutter operation. A period B is a pixel memory writing period during which electric charges accumulated in the PD are converted into a voltage and a signal is written into a pixel memory. A period C is a pixel memory readout period during which a signal is read out from a pixel memory to a signal processing circuit. Next, scanning in the row direction will be described.

In Fig. 5A, for a plurality of pixels arranged on a plurality of rows and a plurality of columns, the period A and the period B are the same period. In the period A and the period B, a so-called global shutter operation is performed. A period C indicates that readout is sequentially performed for each column in a unit of one or a plurality of rows.

As illustrated in Figs. 5B and 5C, an operation can be performed for each block while shifting each of the periods A, B, and C. In this case, it is desirable that the period B, which is a pixel memory writing period, does not operate simultaneously among a plurality of blocks. In a circuit operation illustrated in Fig. 5B, there is a time in which a block of a predetermined pixel memory writing period and a block of a pixel memory readout period simultaneously operate. In a circuit operation illustrated in Fig. 5C, after the period B, which is a pixel memory writing period, ends in all the blocks, the period B, which is a pixel memory readout period, is sequentially performed for each row. According to the circuit operation illustrated in Fig. 5B, a period from when the period A has started to when the period C ends can be shortened in all the pixels, as compared with the circuit operation illustrated in Fig. 5C. In contrast, as illustrated in Fig. 5C, a time taken to end the period C since the period A has started becomes longer than those in the operation methods illustrated in Figs. 5A and 5B. Nevertheless, according to the circuit operation illustrated in Fig. 5C, because an operation in the pixel memory writing period and an operation in the pixel memory readout period do not overlap, it is possible prevent image quality from deteriorating upon receiving influence of crosstalk such as a power variation.

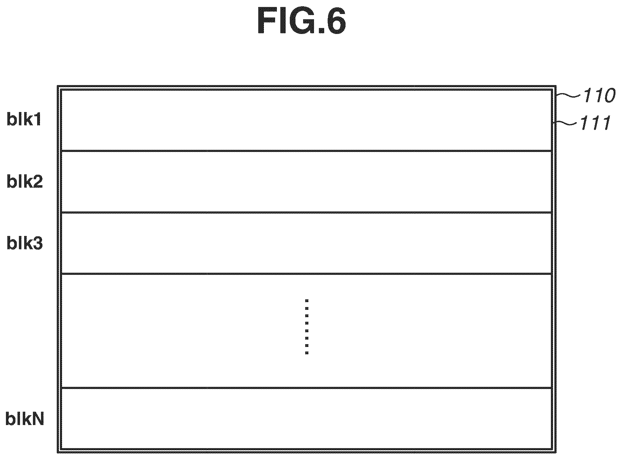

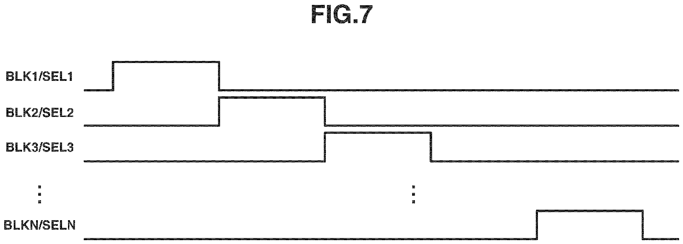

The global shutter operation in the present embodiment can collectively drive a plurality of pixels 30 arranged on all rows, or one block can be divided into a plurality of blocks each including a plurality of pixels 30 arranged on a plurality of rows, and the plurality of pixels 30 can be collectively driven for each block. For example, as illustrated in Fig. 6, pixels can be divided into N blocks (blk1, blk2, blk3, ... , and blkN) each including a pixels on a plurality of rows and a plurality of columns, and the pixels can be driven for each block. For example, as illustrated in Fig. 7, the control signal SEL of the selection transistor 117 and the control signal BLK of the current source switch transistor 218 in Fig. 3 are divided into signals BLK1/SEL1, BLK2/SEL2, ..., and BLKN/SELN. These signals can then control corresponding transistors as control signals. As illustrated in Fig. 7, a signal of a pixel included in each block can be processed for each block.

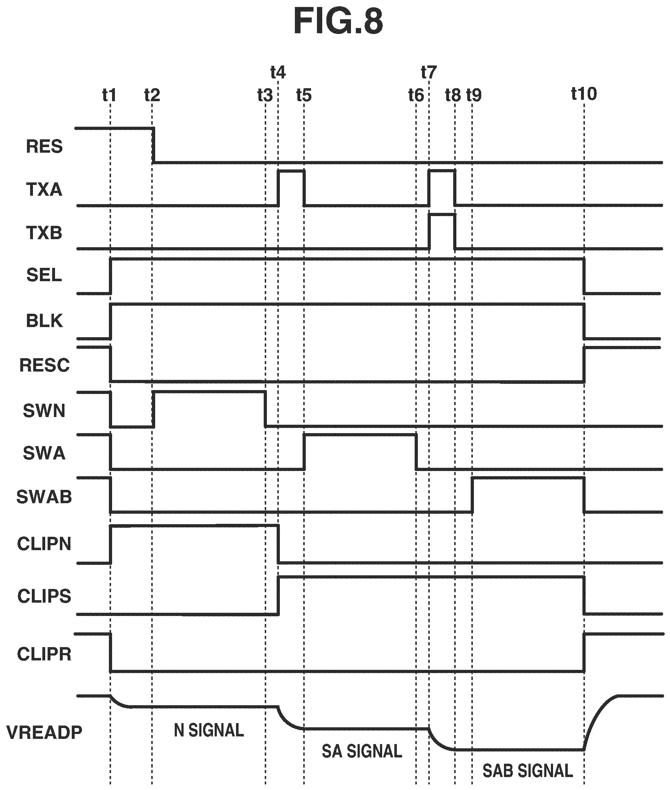

Next, a timing chart of a pixel memory writing period in the period B will be described with reference to Fig. 8.

A period until immediately before a time t1 is an accumulation period, and a period from a time t1 to a time t10 is a pixel memory writing period (period B). At a timing immediately before the time t1, an RES signal is at a high (H) level, and thus the reset transistor 112 is turned ON and the FD is set (reset) to the SVDD voltage. An RESC signal input to the reset transistor 212 is at the H level, and therefore the reset transistor 212 is turned ON and the VREADP node is set to the MVDD voltage. An SWN signal input to the sampling transistor 213, an SWA signal input to the sampling transistor 214, and an SWB signal input to the sampling transistor 215 are also at the H level. The sampling transistors 213, 214, and 215 are turned ON, and therefore one ends of the hold capacitances CN, CA, and CAB are set to the MVDD voltage.

At the time t1, the RESC signal input to the reset transistor 212 changes from the H level to a low (L) level, and the reset transistor 212 is turned OFF from the ON state. The SWN signal input to the sampling transistor 213, the SWA signal input to the sampling transistor 214, and the SWAB signal input to the sampling transistor 215 change from the H level to the L level. Thus, the sampling transistors 213, 214, and 215 change from the ON state to an OFF state. That is, a voltage at the VREADP node at a timing immediately before the time t1 is held in the hold capacitances CN, CA, and CAB.

At the time t1, a SEL signal of the selection transistor 117 and a BLK signal of the current source switch transistor 218 change from the L level to the H level. The selection transistor 117 and the current source switch transistor 218 are turned ON from the OFF state, accordingly. With this configuration, current flows to the amplification transistor 111 included in a pixel, and a signal is written into a pixel memory from a pixel based on the potential of an FD. At the time t1, a CLIPR signal input to the gate of the switch transistor 401 included in the voltage switching circuit changes from the H level to the L level, and the CLIPN signal input to the gate of the switch transistor 402 changes from the L level to the H level. Thus, the switch transistor 401 changes from the ON state to the OFF state, the switch transistor 402 changes from the OFF state to the ON state, and a VCLIP signal input to the gate of the clip transistor 220 changes from a GND voltage to a VCLIPN signal. That is, the clip transistor 220 changes from the OFF state to a clip circuit operation state controlled by the VCLIPN signal.

The clip circuit operation state in which a desired voltage is set to the gate of the clip transistor 220 will now be described in detail. For example, when a gate voltage of the amplification transistor 111 drops, a voltage at the VREADP node drops. As a result, a gate-source voltage of the clip transistor 220 becomes large, and the supply of current from the MVDD power source to the VREADP node is started. That is, the VREADP node is clipped to a voltage lower by a certain amount than the VCLIPN voltage, which is a gate voltage of the clip transistor 220. Here, the clipped state refers to a state where a voltage at the VREADP node stops dropping from a certain voltage and the voltage is fixed in a case where a gate voltage of the amplification transistor 111 drops.

Subsequently, at a time t2, the RES signal input to the reset transistor 112 changes from the H level to the L level, and the FD holds a state immediately before the reset by the SVDD voltage.

Subsequently, at the time t2, the SWN signal input to the gate of the sampling transistor 213 changes from the L level to the H level, and the sampling transistor 213 changes from the OFF state to the ON state. This brings a state in which a noise signal voltage (hereinafter, referred to as an N signal) of a pixel can be written into the hold capacitance CN after the time t2. At a time t3, the SWN signal input to the gate of the sampling transistor 213 changes from the H level to the L level, and the sampling transistor 213 changes from the ON state to the OFF state. The N signal is thereby held in the hold capacitance CN.

At a time t4, a TXA signal input to the transfer transistor 113 changes from the L level to the H level, the transfer transistor 113 is turned ON from the OFF state, and the electric charge of the PD 115 is transferred to the FD.

At the time t4, the CLIPN signal input to the gate of the switch transistor 402 changes from the H level to the L level, and a CLIPS signal input to the gate of the switch transistor 403 changes from the L level to the H level. That is, the VCLIP signal input to the gate of the clip transistor 220 changes from the VCLIPN voltage to the VCLIPS voltage.

Here, voltage setting methods of the VCLIPN voltage and the VCLIPS voltage will be described in detail. First of all, a voltage setting method of the VCLIPS voltage will be described. When a pixel signal is output from the pixel 30 that light is incident and a voltage of the pixel signal is read out to the VREADP node, a voltage at the VREADP node gets closer to the AGND voltage as compared with a voltage applied when an N signal is output. That is, the voltage at the VREADP node drops. When the voltage at the VREADP node drops, a drain-source voltage of the pixel current source transistor 217 becomes small. If the drain-source voltage of the pixel current source transistor 217 becomes small, an operation state of the transistor changes and the pixel current source transistor 217 becomes unable to flow a constant current. For this reason, it is necessary to ensure a sufficient drain-source voltage at which the pixel current source transistor 217 can stably flow a constant current. It is thus necessary to set the gate voltage of the clip transistor 220 to the VCLIPS voltage to clip a voltage at the VREADP node to a voltage at which a drain-source voltage of the pixel current source transistor 217 can be sufficiently ensured.

If a voltage at the VREADP node is changed more than necessary during a period when a voltage of a pixel signal is output when light is incident, this might cause image quality deterioration such as crosstalk. In a case where a large gain is applied with a RAMP signal or the like, as compared with a case where a small gain is applied, it is possible to represent necessary gradation even if a voltage change at the VREADP node is made small. For this reason, it is necessary to set a voltage of a VCLIPS signal to be input to the gate voltage of the clip transistor 220, in such a manner as to clip a voltage at the VREADP node to a voltage higher than a voltage at which a drain-source voltage of the pixel current source transistor 217 can be sufficiently ensured.

Next, a voltage setting method of the VCLIPN voltage will be described. For example, in a case where high-illumination light of an illuminator is incident, an N signal changes due to electric charges overflowing from a PD, and a voltage at the VREADP node drops. In order to read out the light as an image, a voltage difference between a pixel signal and the N signal is required. When a difference between a pixel signal voltage and an N signal voltage becomes small, it becomes difficult to read the light as an image. Thus, the VCLIPS voltage is input to the gate of the clip transistor 220 when the above-described pixel signal voltage is read out. A pixel signal voltage and an N signal voltage need to have a necessary voltage difference with respect to a voltage at the VREADP node clipped by the clip transistor 220. Accordingly, a voltage to be input to the gate of the clip transistor 220 when the N signal is read out is set to the VCLIPN voltage.

At a time t5, the SWA signal input to the sampling transistor 214 changes from the L level to the H level, and the sampling transistor 214 is changed from the OFF state to the ON state. This brings a state in which a first pixel signal voltage (hereinafter, referred to as an SA signal) corresponding to the electric charge of the PD 115 is written into the hold capacitance CA. At a time t6, the SWA signal input to the sampling transistor 214 changes from the H level to the L level, and the sampling transistor 214 changes from the ON state to the OFF state. The SA signal is accordingly held in the hold capacitance CA.

At a time t7, the TXA signal input to the transfer transistor 113 and a TXB signal input to the transfer transistor 114 change from the L level to the H level. The transfer transistors 113 and 114 accordingly change from the OFF state to the ON state, and the electric charges of the PDs 115 and 116 are transferred to the FD. That is, the electric charge of the PD 115 and the electric charge of the PD 116 are added in the FD. At a time t8, the transfer transistors 113 and 114 change from the ON state to the OFF state.

At a time t9, the SWAB signal input to the sampling transistor 215 changes from the L level to the H level, and this makes the sampling transistor 215 to be changed from the OFF state to the ON state. This brings a state in which a second pixel signal voltage (hereinafter, referred to as an SAB signal) corresponding to the electric charges of the PDs 115 and 116 are written into the hold capacitance CAB. At a time t10, the SWAB signal input to the sampling transistor 215 changes from the H level to the L level, and the sampling transistor 215 changes from the ON state to the OFF state. The SAB signal is accordingly held in the hold capacitance CAB.

At the time t10, the CLIPS signal input to the switch transistor 403 changes from the H level to the L level, and the CLIPR signal input to the switch transistor 401 changes from the L level to the H level. Thus, a voltage input to the gate of the clip transistor 220 changes from the VCLIPS voltage to the GND voltage, and the clip transistor 220 enters the OFF state. The RESC signal input to the reset transistor 212 changes from the L level to the H level, and the reset transistor 212 is turned ON. Accordingly, a voltage at the VREADP node is at the MVDD voltage.

In this manner, the N signal, the SA signal, and the SAB signal of each pixel can be held in a hold capacitance of a pixel memory.

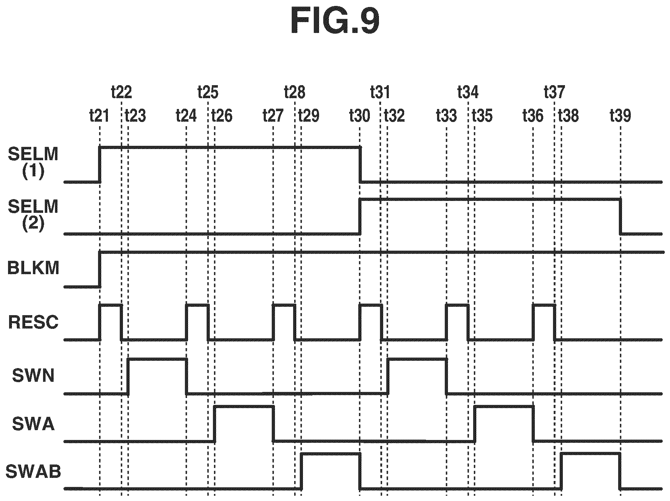

Next, a timing chart of a pixel memory readout period of the period C that is performed following the pixel memory writing period of the period B will be described with reference to Fig. 9.

A period before a time t21 is the pixel memory writing period, and a period from the time t21 to a time t30 is the pixel memory readout period (period C) corresponding to one row, for example. Fig. 9 illustrates the pixel memory readout period corresponding to two rows.

At the time t21, an SELM signal (hereinafter, referred to as an SELM(1) signal, the number in parentheses indicating a row number) input to the selection transistor 219 corresponding to pixels on the first row changes from the L level to the H level, and the selection transistor 219 changes from the OFF state to the ON state. A BLKM signal input to the current source switch transistor 315 changes from the L level to the H level, and the current source switch transistor 315 changes from the OFF state to the ON state. This configuration brings a state in which a current flows to the amplification transistor 211, and a state in which a signal can be read out.

At the time t21, an RETC signal input to the reset transistor 212 changes from the L level to the H level, and a voltage at the VREADP node is set to the SVDD voltage. In the present embodiment, a reset voltage of the VREADP node is set to the SVDD voltage, but another reference voltage can be set. At the time t22, the RETC signal input to the reset transistor 212 changes from the H level to the L level, and the reset transistor 212 changes from the ON state to the OFF state.

Thereafter, at a time t23, the SWN signal input to the sampling transistor 213 changes from the L level to the H level, and the sampling transistor 213 changes from the OFF state to the ON state. The N signal held in the hold capacitance CN is thereby input to the gate of the amplification transistor 211. The N signal output via the amplification transistor 211 is then input to the comparator circuit 311 included in the signal processing circuit 50 to be compared with the RAMP signal.

At a time t24, the RETC signal input to the reset transistor 212 again changes from the L level to the H level, and sets a voltage at the VREADP node to the MVDD voltage again. In this manner, it is desirable to always set a voltage at the VREADP node to the MVDD voltage before a different signal is read out from a hold capacitance. This configuration prevents a selected readout signal from being affected by a state caused before a signal is read out from a selected hold capacitance. At a time t25, the RETC signal input to the reset transistor 212 changes from the H level to the L level.

At a time t26, the SWA signal input to the sampling transistor 214 changes from the L level to the H level, and the sampling transistor 214 changes from the OFF state to the ON state. The SA signal held in the hold capacitance CA is thereby input to the gate of the amplification transistor 211. The SA signal output via the amplification transistor 211 is then input to the comparator circuit 311 included in the signal processing circuit 50 to be compared with the RAMP signal. At a time t27, the SWA signal input to the sampling transistor 214 changes from the H level to the L level, and the sampling transistor 214 changes from the ON state to the OFF state.

Furthermore, at the time t27, the RETC signal input to the reset transistor 212 again changes from the L level to the H level, and the reset transistor 212 changes from the OFF state to the ON state. A voltage at the VREADP node is set to the MVDD voltage. At a time t28, the RETC signal input to the reset transistor 212 changes from the H level to the L level, and the reset transistor 212 changes from the ON state to the OFF state.

At a time t29, the SWAB signal input to the sampling transistor 215 changes from the L level to the H level, and the sampling transistor 215 changes from the OFF state to the ON state.

The SAB signal held in the hold capacitance CAB is thereby input to the gate of the amplification transistor 211. The SAB signal output via the amplification transistor 211 is then input to the comparator circuit 311 included in the signal processing circuit 50 to be compared with the RAMP signal. At a time t30, the SWAB signal input to the sampling transistor 215 changes from the H level to the L level, and the sampling transistor 215 changes from the ON state to the OFF state.

At the time t30, the SELM(1) signal changes from the H level to the L level, and the selection transistor 219 changes from the ON state to the OFF state. In contrast, an SELM(2) signal changes from the H level to the L level, and the selection transistor 219 of a pixel memory unit on a different row changes from the OFF state to the ON state.

A readout operation from the time t21 to the time t30 is sequentially performed for each row while selecting a pixel memory unit on a corresponding row. The BLKM signal input to the current source switch transistor 315 is changed from the H level to the L level at a timing at which the pixel memory readout period ends, and the current source switch transistor 315 is changed from the ON state to the OFF state. In this manner, pixel signals of all pixels are read out from the signal processing circuit 50.

In the present embodiment, a drive method has been described in which two PDs connected to an FD transfer electric charges to the FD by controlling the respective transfer transistors of the two PDs at different timings, and different two pixel signals are written into or read out from a pixel memory. However, the drive method is not limited to this. For example, the respective transfer transistors of two PDs connected to the FD can be simultaneously turned ON, and electric charges can be transferred to the FD. In a case where the number of PDs is one, there is no need to perform a holding operation in the hold capacitance CAB and a readout operation of the SAB signal because the sampling transistor 215 is not essential.

Next, issues and effects of the present embodiment will be described in detail.

The first point is that a clip operation of a voltage at the VREADP node is performed in the pixel memory writing period. Another point is that a clip voltage of the VREADP node is switched in accordance with a readout period of N signal, the SA signal, and the SAB signal. This configuration, as described above, makes it possible to represent necessary gradation even in a case where high-illumination light of, for example, an illuminator is incident. It also becomes easier to reduce image quality deterioration such as crosstalk.

The second point is that the clip transistor 220 is arranged not on the first substrate 100 but on a substrate different from the first substrate 100 on which a PD and the amplification transistor 111 are arranged. In the present embodiment, the clip transistor 220 is arranged not on the first substrate 100 but on the second substrate 200. Because the clip transistor 220 is required in each pixel circuit, the clip transistor 220 is considered to be arranged on the first substrate 100 on which a pixel is arranged. Nevertheless, when the clip transistor 220 is arranged on the first substrate 100, it is necessary to ensure a region for arranging the clip transistor 220 in the first substrate 100, so that an area for arranging a PD on the first substrate 100 is restricted. The number of pixels that can be arranged on the first substrate 100 is also restricted. Nevertheless, in order to form a high-definition and high-sensitivity imaging apparatus, it is necessary to ensure a large area in which a PD and an amplification transistor can be arranged as big as possible within a limited area determined based on a definition. According to the present embodiment, it becomes possible to provide a high-definition and high image quality photoelectric conversion apparatus because the clip transistor 220 is arranged not on the first substrate 100 but on a substrate different from the first substrate 100.

In the present embodiment, an example of the present invention has been described. A circuit configuration and a drive method are not limited to those described in the present embodiment, and the present invention can also be implemented by a circuit configuration and a drive method with another configuration.

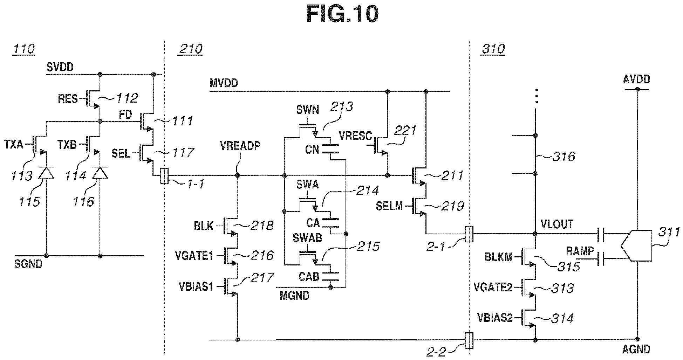

A photoelectric conversion apparatus according to a second embodiment will now be described with reference to Figs. 10 to 13.

A circuit configuration of the pixel 30 arranged on a semiconductor substrate of the first substrate 100, the pixel memory 40 arranged on a semiconductor substrate of the second substrate 200, and a part of the comparator circuit of the signal processing circuit 50 arranged on the third substrate 300 will be described with reference to Fig. 10. The components similar to those in the first embodiment are assigned the same reference numerals, and the description of these components will be sometimes omitted or simplified.

In the first embodiment, the clip transistor 220 and the reset transistor 212 are separately provided, and a clip operation and a readout reset operation are performed. The present embodiment differs from the first embodiment in that one transistor 221 is caused to perform a clip operation and a readout reset operation. The present embodiment also differs from the first embodiment in that a voltage of a control signal VRESC to be input to a gate of the transistor 221 can be switched. Except for these points and points to be described below, the present embodiment can be regarded as being substantially similar to the first embodiment.

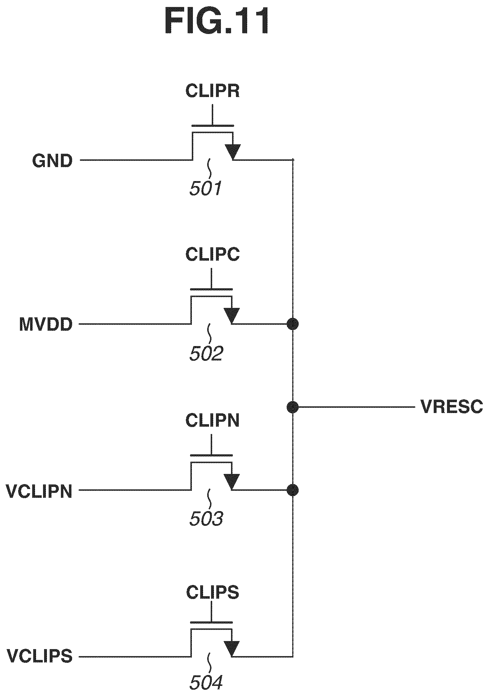

A voltage switching circuit connected to the gate of the transistor 221 of the present embodiment will be described with reference to Fig. 11. The voltage switching circuit illustrated in Fig. 11 is a circuit that switches and supplies a VRESC voltage to be input to the gate of the transistor 221.

In the voltage switching circuit illustrated in Fig. 11, a control signal CLIPR input to a gate of a switch transistor 501, and a GND power source connected to one terminal of a source or a drain, and the like are similar to those of the switch transistor 401 illustrated in Fig. 4. A control signal CLIPN input to a gate of a switch transistor 503, and a VCLIPN power source connected to one terminal of a source or a drain, and the like are similar to those of the switch transistor 402 illustrated in Fig. 4. Furthermore, a control signal CLIPS input to a gate of a switch transistor 504, and a VCLIPS voltage connected to one terminal of a source or a drain, and the like are similar to those of the switch transistor 403 illustrated in Fig. 4.

In the present embodiment, a switch transistor 502 is added as compared with the voltage switching circuit of the first embodiment that is illustrated in Fig. 4. The switch transistor 502 is controlled by a control signal CLIPC input to a gate thereof, and when the switch transistor 502 is turned on, switching can be performed such that an MVDD power voltage is output as the VRESC voltage.

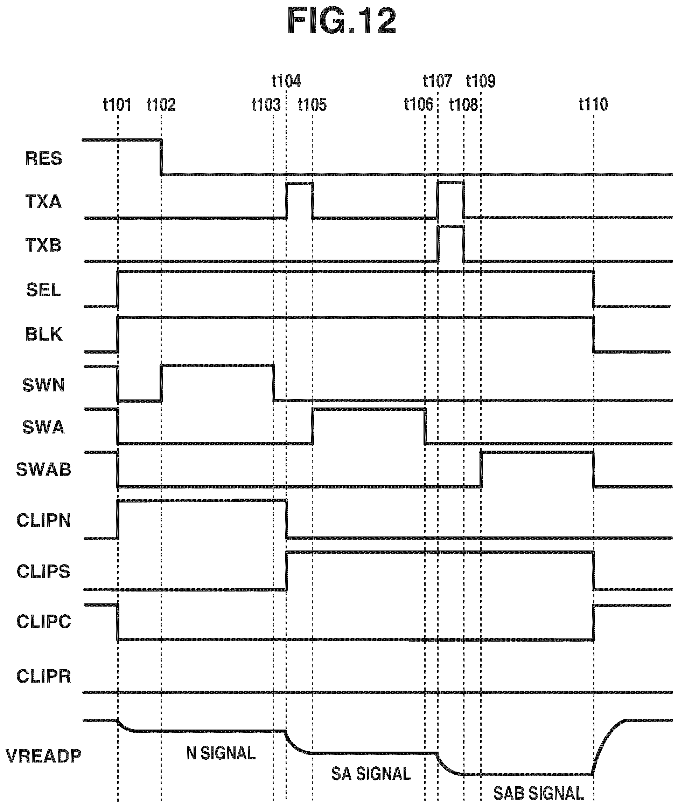

A timing chart of a circuit operation in a pixel memory writing period will be described with reference to Fig. 12.

Before a time t101 and after a time t110, a CLIPC signal input to the gate of the switch transistor 502 is at the H level, and the switch transistor 502 is turned ON. In these periods, the MVDD power voltage is supplied to the gate of the transistor 221 via the switch transistor 502 as the VRESC voltage. That is, the transistor 221 functions as a switch and supplies the MVDD power voltage to the VREADP node. At the time t101, the CLIPC signal input to the gate of the switch transistor 502 changes from the H level to the L level, and the switch transistor 502 changes from the ON state to the OFF state.

During a period from the time t101 to a time t104, the CLIPN signal input to the gate of the switch transistor 503 is at the H level, and the switch transistor 503 is turned ON. In this period, the VCLIPN voltage is supplied to the gate of the transistor 221 via the switch transistor 503 as the VRESC voltage. In this period, when a voltage at the VREADP node drops down to a predetermined threshold value, a gate voltage is subjected to a clip operation executed by the transistor 221, in response to the VCLIPN voltage. At the time t104, the CLIPN signal input to the gate of the switch transistor 503 changes from the H level to the L level, and the switch transistor 503 changes from the ON state to the OFF state.

During a period from the time t104 to the time t110, the CLIPS signal input to the gate of the switch transistor 504 is at the H level, and the switch transistor 504 is turned ON. In this period, the VCLIPS voltage is supplied to the gate of the transistor 221 via the switch transistor 504 as the VRESC voltage. In this period, if a voltage at the VREADP node drops down to a predetermined threshold value, a gate voltage is subjected to a clip operation executed by the transistor 221, in response to the VCLIPS voltage.

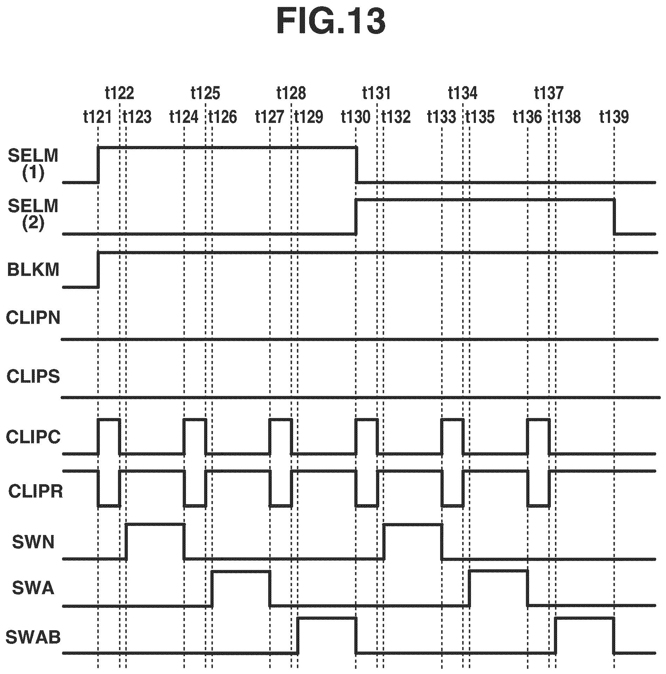

Next, a timing chart of a circuit operation in a pixel memory readout period will be described with reference to Fig. 13. The transistor 221 performs only a switch operation of switching between the ON state and the OFF state. When the CLIPC signal is at the H level, the MVDD power voltage is supplied to the transistor 221 via the switch transistor 502 serving as the VRESC voltage. When the CLIPR signal is at the H level, the GND power voltage is also supplied to the transistor 221 via the switch transistor 501 serving as the VRESC voltage. When the VRESC voltage is the MVDD power voltage, the transistor 221 enters the ON state, and when the VRESC voltage is the GND power voltage, the transistor 221 enters the OFF state. When the transistor 221 is in the ON state, the potential of the VREADP node is reset, and when the transistor 221 is in the OFF state, a signal is read out to the third substrate 300. In this manner, signal readout is performed by switching ON and OFF of the transistor 221.

Even in the present embodiment, it becomes possible to represent necessary gradation by performing a clip operation of the VREADP node similarly to the first embodiment. It becomes also possible to prevent image quality deterioration such as crosstalk. It is also possible to provide a high-definition and high image quality imaging apparatus because arranging a transistor that performs a clip operation of the VREADP node, on a substrate other than the first substrate 100 eliminates the need to reduce an area of a PD and an arear of an amplification transistor. Furthermore, it becomes possible to reduce the number of transistors arranged on the second substrate 200 by using the transistor 221 for both of a clip operation and a reset operation.

In the present embodiment, the transistor 221 is arranged on the second substrate 200, but the transistor 221 can also be arranged on the third substrate 300.

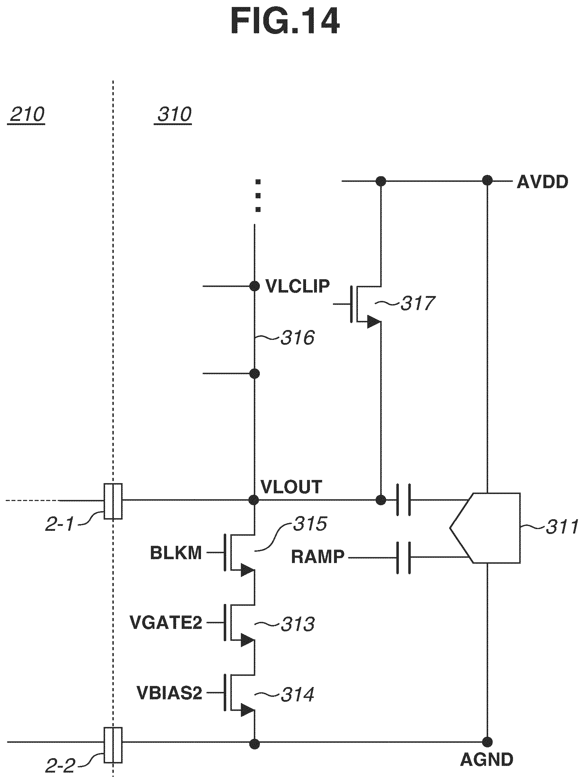

A photoelectric conversion apparatus according to a third embodiment will be described with reference to Fig. 14.

Fig. 14 illustrates a circuit configuration of a part of a comparator circuit of the signal processing circuit 50 arranged on the third substrate 300. The components similar to those in the first or second embodiment are assigned the same reference numerals, and the description of these components will be sometimes omitted or simplified.

The present embodiment differs from the first embodiment and the second embodiment in that a clip transistor 317 is connected to the VLOUT node to which a signal is output from the second substrate 200. Except for this point and points to be described below, the present embodiment can be regarded as being substantially similar to the first embodiment or the second embodiment.

A VLCLIP signal is supplied to a gate of the clip transistor 317. One terminal of a source or a drain of the clip transistor 317 is connected to the AVDD power source, and the other terminal is connected to the VLOUT node.

The VLOUT node is connected with many loads such as the readout line 316 arranged in the row direction, the VLOUT node thereby has many electric charges to be charged and discharged. For this reason, it is desirable to make drive capability of the clip transistor 317 larger as compared with the clip transistor 220 of the first embodiment and the transistor 221 of the second embodiment. A ratio of a channel width with respect to a channel length of the clip transistor 317 can be made larger than that of the clip transistor 220 or the transistor 221, for example. A voltage as described in the first embodiment and the second embodiment is set as a voltage at the VLCLIP node.

Even in a case where a transistor that performs a clip operation of the VREADP node that is described in the first embodiment and the second embodiment is not included, it is possible to perform a clip operation of the VLOUT node by using the clip transistor 317 of the present embodiment. That is, the clip transistor 220 and the transistor 221 are not essential components for the present embodiment.

In contrast, it is desirable to arrange transistors that perform clip operations, on the second substrate 200 and the third substrate 300. This configuration allows the second substrate 200 to perform the test by controlling the VREADP node with the transistor that performs a clip operation in the case of performing a test for determining a non-defective product and a defective product for each substrate. The third substrate 300 can perform the test by controlling a voltage at the VLOUT node with the transistor that performs a clip operation.

According to the present embodiment, it becomes possible to represent necessary gradation, and prevent image quality deterioration such as crosstalk. It is also possible to provide a high-definition and image quality imaging apparatus by arranging a transistor that performs a clip operation, on the third substrate 300 because an area of a PD and an area of an amplification transistor are not to be reduced on the first substrate 100.

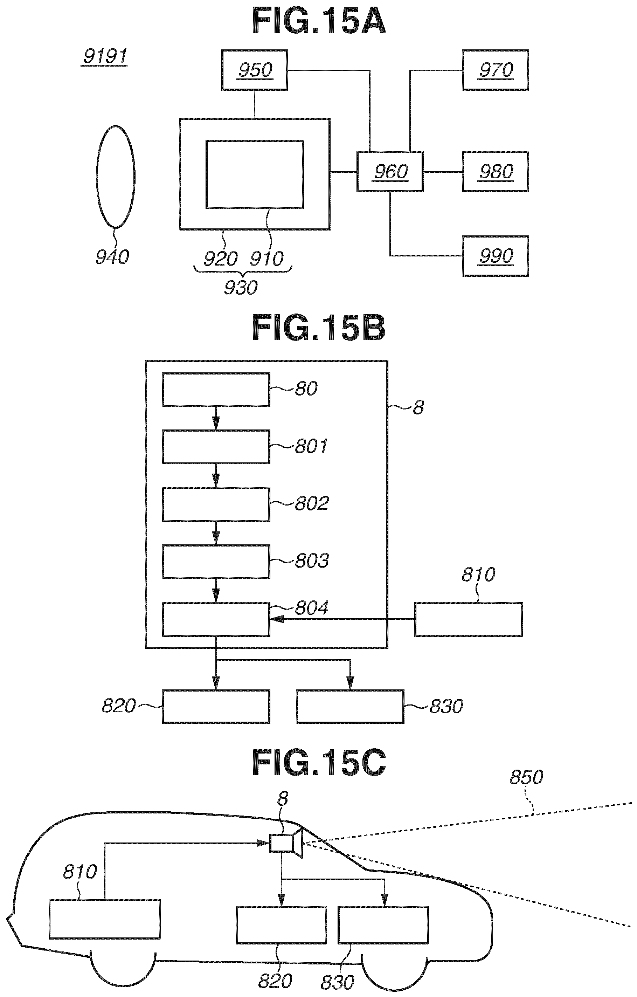

A fourth embodiment can be applied to any of the first to third embodiments. Fig. 15A is a schematic diagram illustrating an equipment 9191 including a semiconductor apparatus 930 according to the present embodiment. The photoelectric conversion apparatus according to each of the above-described embodiments can be used for the semiconductor apparatus 930. The equipment 9191 including the semiconductor apparatus 930 will be described in detail. The semiconductor apparatus 930 can include a semiconductor device 910. Aside from the semiconductor device 910, the semiconductor apparatus 930 can include a package 920 storing the semiconductor device 910. The package 920 can include a base member on which the semiconductor device 910 is fixed, and a lid member such as glass facing the semiconductor device 910. The package 920 can also include a bonding member such as a bonding wire or a bump that connects a terminal provided in the base member and a terminal provided in the semiconductor device 910.

The equipment 9191 can include at least any of an optical device 940, a control device 950, a processing device 960, a display device 970, a storage device 980, and a mechanical device 990. The optical device 940 corresponds to the semiconductor apparatus 930. The optical device 940 is a lens, a shutter, or a mirror, for example, and includes an optical system for guiding light to the semiconductor apparatus 930. The control device 950 controls the semiconductor apparatus 930. The control device 950 is a semiconductor apparatus such as an application specific integrated circuit (ASIC), for example.

The processing device 960 processes a signal output from the semiconductor apparatus 930. The processing device 960 is a semiconductor apparatus such as a CPU or an ASIC for forming an analog front end (AFE) or a digital front end (DFE). The display device 970 is an electroluminescent (EL) display device or a liquid crystal display device that displays information (image) obtained in the semiconductor apparatus 930. The storage device 980 is a magnetic device or a semiconductor device that stores information (image) obtained in the semiconductor apparatus 930. The storage device 980 is a volatile memory such as a static RAM (SRAM) or a dynamic RAM (DRAM), or a nonvolatile memory such as a flash memory or a hard disk drive.

The mechanical device 990 includes a moving unit or a propulsion unit such as a motor or an engine. The equipment 9191 displays a signal output from the semiconductor apparatus 930 on the display device 970, and transmits the signal using a communication device included in the equipment 9191. For this reason, the equipment 9191 desirably further includes the storage device 980 and the processing device 960 aside from a storage circuit and a calculation circuit included in the semiconductor apparatus 930. The mechanical device 990 can be controlled based on a signal output from the semiconductor apparatus 930.

The equipment 9191 is also suitable for an electronic device such as an information terminal having an image capturing function (e.g., smartphone or wearable terminal) or a camera (e.g., interchangeable lens camera, compact camera, video camera, monitoring camera). The mechanical device 990 in a camera can drive components of the optical device 940 for zooming, focusing, or a shutter operation. Alternatively, the mechanical device 990 in a camera can move the semiconductor apparatus 930 for an image stabilization operation.

The equipment 9191 can also be a transport device such as a vehicle, a ship, or a flight vehicle (e.g., drone, airplane). The mechanical device 990 in a transport device can be used as a moving device. The device 9191 serving as a transport device is suitable for a device that transports the semiconductor apparatus 930, or a device that aids and/or automates driving (steering) using an image capturing function. The processing device 960 for aiding and/or automating driving (steering) can perform processing for operating the mechanical device 990 serving as a moving device, based on information obtained in the semiconductor apparatus 930. Alternatively, the equipment 9191 can be a medical device such as an endoscope, a measuring device such as a distance measuring sensor, an analytical device such as an electronic microscope, an office device such as a copier, or an industrial device such as a robot.

According to the above-described embodiment, it becomes possible to obtain good pixel characteristics. It is accordingly possible to enhance the value of the semiconductor apparatus. The enhancement of the value corresponds to at least any of the addition of a function, performance improvement, characteristic improvement, reliability improvement, manufacturing yield ratio improvement, environmental burden reduction, cost reduction, downsizing, and weight saving.

If the semiconductor apparatus 930 according to the present embodiment is used in the equipment 9191, the value of the device 9191 can also be enhanced, accordingly. For example, it is possible to obtain superior performance when performing the image capturing of the outside of the transport device or measuring an external environment. Thus, determining to mount the semiconductor apparatus according to the present embodiment on a transport device when manufacturing and selling the transport device is advantageous in improving the performance of the transport device itself. The semiconductor apparatus 930 is suitable especially for a transport device that performs drive assist and/or automatic operation of the transport device using information obtained in the semiconductor apparatus.

A photoelectric conversion system and a movable body according to the present embodiment will be described with reference to Figs. 15B and 15C.

Fig. 15B illustrates an example of a photoelectric conversion system related to an in-vehicle camera. A photoelectric conversion system 8 includes a photoelectric conversion apparatus 1. The photoelectric conversion apparatus 1 is the photoelectric conversion apparatus (imaging apparatus) according to any of the above-described embodiments. The photoelectric conversion system 8 includes an image processing unit 801 that performs image processing on a plurality of pieces of image data acquired by the photoelectric conversion apparatus 1, and a parallax acquisition unit 802 that calculates a parallax (phase difference between parallax images) from the plurality of pieces of image data acquired by the photoelectric conversion system 8. Here, the photoelectric conversion system 8 can include an optical system (not illustrated) such as a lens, a shutter, or a mirror, for example, that guides light to the photoelectric conversion apparatus 80. A plurality of photoelectric conversion units approximately conjugate with a pupil of the optical system can also be arranged in pixels included in photoelectric conversion apparatus 80. For example, the plurality of photoelectric conversion units approximately conjugate with the pupil are arranged to correspond to one microlens. The plurality of photoelectric conversion units receives light beams having passed through mutually-different position of the pupil of the optical system, and thereby the photoelectric conversion apparatus 80 outputs image data corresponding to the light beams having passed through the different position. The parallax acquisition unit 802 can also calculate a parallax using the output image data. The photoelectric conversion system 8 can also include a control unit that controls the movement of a movable body using a signal output by the photoelectric conversion apparatus. For example, the photoelectric conversion system 8 includes a distance acquisition unit 803 that calculates a distance to a target object based on the calculated parallax, and a collision determination unit 804 that determines whether collision is likely to occur, based on the calculated distance. In this example, the parallax acquisition unit 802 and the distance acquisition unit 803 serve as an example of a distance information acquisition unit that acquires distance information regarding a distance to a target object. More specifically, the distance information is information regarding a parallax, a defocus amount, and a distance to a target object. The collision determination unit 804 can determine collision likelihood using any of these pieces of distance information. The distance information can be acquired using a Time Of Flight (ToF). The distance information acquisition unit can be implemented by dedicatedly-designed hardware, or can be implemented by a software module. Alternatively, the distance information acquisition unit can be implemented by a field programmable gate array (FPGA) or an ASIC, or can be implemented by the combination of these.

The photoelectric conversion system 8 is connected with a vehicle information acquisition apparatus 810, and can acquire vehicle information such as a vehicle speed, a yaw rate, or a rudder angle. The photoelectric conversion system 8 is also connected with an electronic control unit (ECU) 820. The ECU 820 serves as a control apparatus that outputs a control signal for generating braking force to a vehicle based on a determination result obtained by the collision determination unit 804. The photoelectric conversion system 8 is also connected with an alarm apparatus 830 that raises an alarm to a driver based on a determination result obtained by the collision determination unit 804. For example, in a case where the determination result obtained by the collision determination unit 804 indicates high collision likelihood, the ECU 820 performs vehicle control for avoiding collision or reducing damages by braking, releasing an accelerator, or suppressing engine output. The alarm apparatus 830 issues an alarm to a user by sounding an alarm, displaying warning information on a screen of a car navigation system or the like, or vibrating a seatbelt or a steering wheel.

In the present embodiment, the photoelectric conversion system 8 captures an image of the periphery of the vehicle such as the front side or the rear side.

Fig. 15C illustrates the photoelectric conversion system 8 for capturing an image of a vehicle front side (imaging range 850). The vehicle information acquisition apparatus 810 issues an instruction to the photoelectric conversion system 8 or the photoelectric conversion apparatus 1. This configuration can enhance the accuracy of distance measurement.

The above description has been given of an example in which control is performed not to collide with another vehicle. However, the photoelectric conversion system 8 can also be applied to the control for performing automatic operation of following another vehicle, or the control for performing automatic operation not to deviate from a lane. The photoelectric conversion system 8 can also be applied to a movable body (movable device), such as a vessel, an aircraft, or an industrial robot as well as a vehicle such as an automobile. This movable body includes either one or both of a drive force generation unit that generates drive force to be mainly used for the movement of the movable body, and a rotator to be mainly used for the movement of the movable body. The drive force generation unit can be an engine, a motor, or the like. The rotator can be a tire, a wheel, a screw of a ship, a propeller of a flight vehicle, or the like. Moreover, the photoelectric conversion system 8 can be applied to an equipment that extensively uses object recognition, such as an intelligent transport system (ITS), as well as a movable body.

In this specification, the wordings such as "A or B", "at least one of A and B", "at least one of A or/and B", and "one or more of A or/and B" include all possible combinations of listed items, unless otherwise explicitly defined. That is, the above-described wordings are interpreted as disclosing all cases of a case where at least one A is included, a case where at least one B is included, and a case where both of at least one A and at least one B are included. This also applies to the combination of three or more components.

The embodiments described above can be appropriately changed within a scope without departing from the technical idea. The disclosure in this specification is not limited to matters described in this specification, and includes all matters that can be identified from this specification and the drawings accompanying this specification. The disclosure in this specification includes a complementary set of individual concepts described in this specification. In other words, if "A is larger than B" is described in this specification, this specification is assumed to disclose that "B is not larger than A" even if the description "B is not larger than A" is omitted. This is because, in a case where "A is larger than B" is described, a case where "A is not larger than B" is assumed to be considered.

The disclosure of the present embodiment includes the following configurations.

### (Configuration 1)

A photoelectric conversion apparatus comprising at least two substrates including: a first substrate including a pixel unit in which a plurality of pixels each including a photoelectric conversion element and an amplification transistor are arranged in an array; and a second substrate including a memory unit configured to hold an analog signal output by the pixel unit, wherein a current source, and a transistor that is connected to a node through which signals output from the current source and the amplification transistor pass and is configured to clip a potential of the node, and wherein the transistor can switch an operation of resetting a potential of the node, and an operation of clipping a potential of the node.

### (Configuration 2)

A photoelectric conversion apparatus comprising at least two substrates including: a first substrate including a pixel unit in which a plurality of pixels each including a photoelectric conversion element and an amplification transistor are arranged in an array; and a second substrate including a memory unit configured to hold an analog signal output by the pixel unit, wherein a current source, and a transistor connected to a node through which signals output from the current source and the amplification transistor pass are arranged on a substrate different from the first substrate out of the at least two substrates, and wherein the transistor can switch an operation of resetting a potential of the node, and an operation of clipping a potential of the node.

### (Configuration 3)

The photoelectric conversion apparatus according to Configuration 1 or 2, wherein the at least two substrates further include a third substrate including a signal processing circuit configured to process an analog signal from the memory unit, wherein the second substrate is arranged between the first substrate and the third substrate, and wherein the current source and the transistor are arranged in the third substrate.

### (Configuration 4)

The photoelectric conversion apparatus according to Configuration 1 or 2, wherein the at least two substrates further include a third substrate including a signal processing circuit configured to process an analog signal from the memory unit, wherein the second substrate is arranged between the first substrate and the third substrate, wherein the second substrate includes a second amplification transistor, and wherein, in the third substrate, a second current source, and a second transistor configured to clip a potential of a second node through which signals output from the second current source and the second amplification transistor pass are arranged, the second transistor being connected to the second node.

### (Configuration 5)

The photoelectric conversion apparatus according to Configuration 4, wherein drive capability of the second transistor is larger than the drive capability of the transistor.

### (Configuration 6)

The photoelectric conversion apparatus according to Configuration 4 or 5, wherein a ratio of a channel width to a channel length of the second transistor is larger than a ratio of a channel width to a channel length of the transistor.

### (Configuration 7)

The photoelectric conversion apparatus according to any one of Configurations 1 to 6, wherein a pixel included in the pixel unit includes a floating diffusion configured to convert a charge generated by the photoelectric conversion element into a signal, wherein the amplification transistor includes an amplification transistor configured to amplify the signal, and wherein the analog signal output by the pixel unit is a signal output by the amplification transistor.

### (Configuration 8)

The photoelectric conversion apparatus according to Configuration 7, wherein the amplification transistor is a source follower transistor.

### (Configuration 9)

The photoelectric conversion apparatus according to Configuration 7 or 8, wherein the memory unit includes a plurality of pixel memories arranged in an array, and wherein each of the plurality of pixel memories holds the analog signal output from each of the plurality of pixels.

### (Configuration 10)

The photoelectric conversion apparatus according to any one of Configurations 1 to 9, wherein the first substrate includes a first metal portion and a first insulating film, wherein the second substrate includes a second metal portion and a second insulating film, and wherein, on a bonded surface of the first substrate and the second substrate, a bonded portion of the first metal portion and the second metal portion and a bonded portion of the first insulating film and the second insulating film are arranged.

### (Configuration 11)

An equipment comprising the photoelectric conversion apparatus according to any one of Configurations 1 to 10, wherein the device further includes at least any of the following: an optical device configured to guide light to the photoelectric conversion apparatus; a control device configured to control the photoelectric conversion apparatus; a processing device configured to process a signal output from the photoelectric conversion apparatus; a display device configured to display information obtained by the photoelectric conversion apparatus; a storage device configured to store information obtained by the photoelectric conversion apparatus; and a mechanical device configured to operate based on information obtained by the photoelectric conversion apparatus.

### (Configuration 12)

A movable body comprising: the photoelectric conversion apparatus according to any one of Configurations 1 to 10; and a control unit configured to control a movement of the movable body using a signal output by the photoelectric conversion apparatus.

According to an embodiment of the present invention, it is possible to provide a photoelectric conversion apparatus that can improve image quality.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. A photoelectric conversion apparatus (10) comprising at least two substrates including:
a first substrate (100) including a pixel unit (110) in which a plurality of pixels each including a photoelectric conversion element and an amplification transistor are arranged in an array; and
a second substrate (200) including a memory unit (210) for holding an analog signal output by the pixel unit (110),
wherein a current source, and a transistor connected to a node through which signals output from the current source and the amplification transistor pass are arranged on a substrate different from the first substrate (100) out of the at least two substrates, and
wherein the transistor can switch an operation of resetting a potential of the node, and an operation of clipping a potential of the node.

2. The photoelectric conversion apparatus (10) according to claim 1,
wherein the at least two substrates further include a third substrate (300) including a signal processing circuit (310) for processing an analog signal from the memory unit (210),
wherein the second substrate (200) is arranged between the first substrate (100) and the third substrate (300), and
wherein the current source and the transistor are arranged in the third substrate (300).

3. The photoelectric conversion apparatus (10) according to claim 1,
wherein the at least two substrates further include a third substrate (300) including a signal processing circuit (310) for processing an analog signal from the memory unit (210),
wherein the second substrate (200) is arranged between the first substrate (100) and the third substrate (300),
wherein the second substrate (200) includes a second amplification transistor, and
wherein, in the third substrate (300), a second current source, and a second transistor for clipping a potential of a second node through which signals output from the second current source and the second amplification transistor pass are arranged, the second transistor being connected to the second node.

4. The photoelectric conversion apparatus (10) according to claim 3, wherein drive capability of the second transistor is larger than the drive capability of the transistor.

5. The photoelectric conversion apparatus (10) according to claim 3 or 4, wherein a ratio of a channel width to a channel length of the second transistor is larger than a ratio of a channel width to a channel length of the transistor.

6. The photoelectric conversion apparatus (10) according to any one of claims 1 to 5,
wherein a pixel included in the pixel unit (110) includes a floating diffusion for converting a charge generated by the photoelectric conversion element into a signal,
wherein the amplification transistor includes an amplification transistor for amplifying the signal, and
wherein the analog signal output by the pixel unit (110) is a signal output by the amplification transistor.

7. The photoelectric conversion apparatus (10) according to claim 6, wherein the amplification transistor is a source follower transistor.

8. The photoelectric conversion apparatus (10) according to any one of claims 1 to 7,
wherein the memory unit (210) includes a plurality of pixel memories arranged in an array, and
wherein each of the plurality of pixel memories holds the analog signal output from each of the plurality of pixels.

9. The photoelectric conversion apparatus (10) according to any one of claims 1 to 8,
wherein the first substrate (100) includes a first metal portion and a first insulating film,
wherein the second substrate (200) includes a second metal portion and a second insulating film, and
wherein, on a bonded surface of the first substrate (100) and the second substrate (200), a bonded portion of the first metal portion and the second metal portion and a bonded portion of the first insulating film and the second insulating film are arranged.

10. An equipment comprising the photoelectric conversion apparatus (10) according to any one of claims 1 to 9,
wherein the equipment further includes at least one of devices selected from the group consisting of:
an optical device for guiding light to the photoelectric conversion apparatus (10);
a control device for controlling the photoelectric conversion apparatus (10);
a processing device for processing a signal output from the photoelectric conversion apparatus (10);
a display device for displaying information obtained by the photoelectric conversion apparatus (10);
a storage device for storing information obtained by the photoelectric conversion apparatus (10); and
a mechanical device for operating based on information obtained by the photoelectric conversion apparatus (10).

11. A movable body comprising:
the photoelectric conversion apparatus (10) according to any one of claims 1 to 9; and
control means for controlling a movement of the movable body using a signal output by the photoelectric conversion apparatus (10).
